# EUROPÄISCHE PATENTSCHRIFT

(11) **EP 1 454 781 B1**
(45) Veröffentlichungstag und Bekanntmachung des Hinweises auf die Patenterteilung: **14.06.2006**
(21) Anmeldenummer: 04003960.4
(22) Anmeldetag: 21.02.2004
(51) Int. Cl.: B60J 5/04, B62D 25/02

(54) **Fahrzeugkarosserie mit einer linken und einer rechten Seitentüre**
Vehicle body with link and right doors
Carosserie de véhicule avec des portières gauche et droite

(30) Priorität: 03.03.2003 DE 10309059
(43) Veröffentlichungstag der Anmeldung: 08.09.2004
(73) Patentinhaber: Bayerische Motoren Werke Aktiengesellschaft, 80809 München (DE)
(72) Erfinder: Stauch, Holger, 82229 Seefeld (DE); Floer, Michael, Dr., 80809 München (DE)

(56) Entgegenhaltungen:
- EP-A- 0 788 912
- DE-A- 19 945 590
- US-A1- 2002 153 742

## Beschreibung

Die Erfindung betrifft eine Fahrzeugkarosserie mit einer linken und einer rechten Seitentüre gemäß des Oberbegriffs des Patentanspruchs 1.

Aus der DE 199 45 590 A1 ist eine Karosserie für ein Kraftfahrzeug bekannt, die einen Querträger in Höhe einer Sitzfläche einer Rücksitzbank aufweist, der sich zwischen den gegenüberliegenden Seitenwänden oder Seitentüren erstreckt. Der Querträger ist als Hohlprofil ausgebildet. Dadurch wird die Karosserie insbesondere für den Fall eines Seitencrashs verstärkt, ohne dass damit eine erhebliche Gewichtserhöhung der Karosserie verbunden ist.

Aufgabe der Erfindung ist es, eine Fahrzeugkarosserie für ein Cabriolet oder Coupé zu schaffen, die bei einem Seitenaufprall einen außerordentlich guten Schutz für die Insassen bietet.

Diese Aufgabe wird durch die Merkmale des Patentanspruchs 1 gelöst.

Erfindungsgemäß weist eine Fahrzeugkarosserie eine linke und eine rechte Seitentüre und einen hinteren Querträger auf, der zwischen den an die Seitentüren - in Fahrtrichtung gesehen - hinten angrenzenden Abschnitten der Fahrzeugkarosserie im Bereich der hinteren Sitzbank verläuft. In den Seitentüren verläuft über deren gesamte Längserstreckung jeweils zumindest eine Türverstärkung, deren hinterer Endabschnitt eine Vorrichtung aufweist, die bei geschlossener Seitentür in Fahrzeuglängsrichtung formschlüssig und / oder kraftschlüssig mit dem hinteren Querträger verbunden ist. Dadurch schließt der Endbereich der Türverstärkungen unmittelbar an den hinteren Querträger an.

Bei einem Seitencrash ist es von großer Bedeutung, dass die Intrusion der Fahrzeugkarosserie in den Fahrgastraum so gering wie möglich gehalten wird. Der bereits bekannte hintere Querträger trägt dazu im hinteren der Bereich der Fahrzeugkarosserie maßgeblich bei. Die erfindungsgemäßen Türverstärkungen nehmen die bei einem Seitenaufprall entstehenden Kräfte im Bereich der Seitentüren auf. Solche Türverstärkungen sind für sich alleine zwar bereits aus der EP 0 788 912 B1 bekannt, sie können aber ihre optimale Wirkung nur dann entfalten, wenn die bei einem Seitencrash in eine Türverstärkung eingeleiteten Kräfte auch gut aus den Türverstärkungen in angrenzende Bauteile abgeleitet werden können. Dies wird erfindungsgemäß durch die bei geschlossener Seitentür in Fahrzeuglängsrichtung formschlüssige Verbindung der Türverstärkungen mit dem hinteren Querträger gelöst. Im vorderen Bereich kann die Türverstärkung die Kräfte meist durch relativ massiv ausgeführte Scharniere sowieso in die angrenzende Fahrzeugkarosserie gut ableiten. Durch den Formschluss hinten bildet die Türverstärkung nun bei einem Seitenaufprall eine Art Zugverband, über das die Aufprallenergie in die übrige Fahrzeugkarosserie gut abgeleitet werden kann.

Aufgrund des Formschlusses kann nach einem Seitenaufprall die betroffene Seitentür normalerweise nicht mehr geöffnet werden, da die Seitentür mit Vorspannung in dem Formschluss gehalten ist. Dies ist nach den gesetzlichen Anforderungen aber auch nicht erforderlich, da der Ausstieg über die vom Seitenaufprall nicht betroffene Seitentür immer noch möglich ist.

Der Formschluss in Fahrzeuglängsrichtung zwischen der Türverstärkung und dem hinteren Querträger kann günstigerweise über einen Haken erfolgen, der an der Türverstärkung im hinteren Endbereich angebracht ist. Dieser türseitige Haken greift in ein Gegenstück ein, das mit dem hinteren Querträger verbunden ist. Dieses Gegenstück kann beispielsweise wiederum ein Haken sein, oder aber auch ein Bauteil mit einer Ausnehmung, in die der türseitige Haken eingreifen kann, wenn die Seitentür geschlossen ist. Alternativ kann der Formschluss bevorzugt auch über einen Zapfen als Vorrichtung erzeugt werden, der an der Türverstärkung angebracht ist. Der Zapfen greift analog in ein Gegenstück ein, das mit dem hinteren Querträger verbunden ist. Das Gegenstück kann beispielsweise ein Bauteil mit einer zum Zapfen passenden Ausnehmung sein.

Vorteilhafterweise verläuft ein vorderer Querträger im Bereich zwischen den vorderen Enden der Türverstärkungen. Dadurch können sich die Türverstärkungen vorne bei einem Seitenaufprall direkt oder indirekt an dem vorderen Querträger abstützen, sodass eine Verformung der Fahrgastzelle in diesem Bereich minimiert werden kann. Ein solcher vorderer Querträger ist bevorzugt ein Windlauf oder ein Tragrohr einer Instrumententafel. Sowohl ein Windlauf unterhalb einer Frontscheibe wie auch ein Tragrohr einer Instrumententafel sind sowieso erforderliche Bauteile, die leicht verstärkt ausgeführt werden können.

Idealerweise ist am vorderen Endabschnitt der Türverstärkung ebenfalls eine Vorrichtung angebracht, die bei geschlossener Seitentür in Fahrzeuglängsrichtung formschlüssig direkt oder indirekt mit dem vorderen Querträger verbunden ist. Dadurch entsteht ein geschlossener Ringverbund aus den Türverstärkungen, dem vorderen und dem hinteren Querträger. Solch ein geschlossener Ringverbund stellt einen optimalen Schutz bei einem Seitenaufprall dar. Analog zu der Vorrichtung im hinteren Endbereich kann die Vorrichtung am vorderen Endbereich der Türverstärkung ebenfalls bevorzugt als Haken oder Zapfen ausgeführt sein, der bei geschlossener Seitentür in ein am vorderen Querträger angebrachtes Gegenstück eingreift.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- **Fig. 1**: eine perspektivische Ansicht einer Fahrzeugkarosserie eines Coupés und
- **Fig. 2**: eine perspektivische Detailansicht der Fahrzeugkarosserie aus **Fig.** 1 im Bereich der Anlenkung einer linken Seitentür.

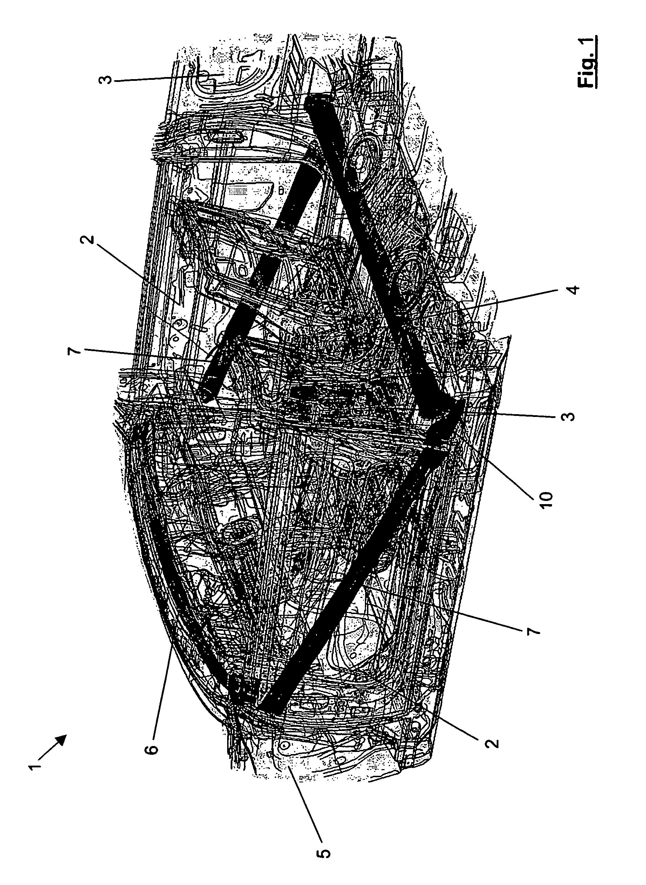

In **Fig. 1** ist ein Teil einer Fahrzeugkarosserie 1 eines Coupés dargestellt. Die Fahrzeugkarosserie 1 weist eine linke und eine rechte Seitentür 2 auf, die vorne angelenkt sind. An die Seitentüren 2 grenzt - in Fahrtrichtung gesehen - hinten jeweils eine Seitenwand 3 an. Zwischen der linken und der rechten Seitenwand 3 verläuft ein hinterer Querträger 4 im Bereich einer hinteren Sitzbank. Vorne grenzen an die Seitentüren 2 jeweils eine A-Säule 5 an. Zwischen der linken und der rechten A-Säule 5 verläuft ein vorderer Querträger 6, der zugleich den Windlauf bildet, also die untere Begrenzung einer Frontscheibe. In den beiden Seitentüren 2 verläuft jeweils diagonal von vorne oben nach hinten unten eine Türverstärkung 7.

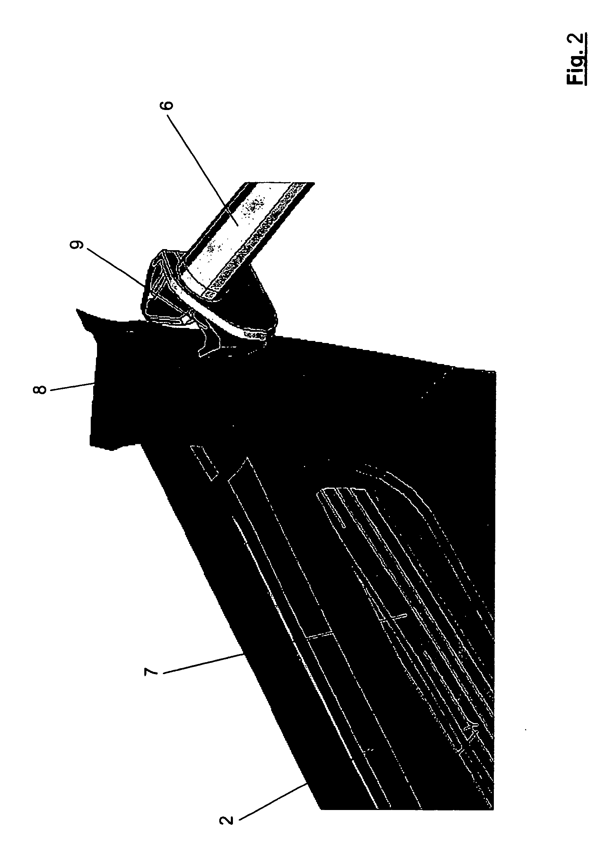

Wie in **Fig. 2** erkennbar ist an am vorderen Endbereich der Türverstärkung 7 ein Haken 8 angebracht. Wenn die Seitentür 2 geschlossen ist, greift der Haken 8 in ein Gegenstück 9 ein, das mit dem vorderen Querträger 6 verbunden ist. Das Gegenstück 9 hat ebenfalls die Form eines Hakens. Dadurch entsteht ein Formschluss zwischen der Türverstärkung 7 und dem vorderen Querträger 6 in Fahrzeuglängsrichtung.

Am hinteren Endbereich der Türverstärkung 7 ist ebenfalls ein solcher Haken angebracht. Dieser hintere Haken greift ebenfalls in ein hakenförmiges Gegenstück ein, das über ein Zugband 10 mit dem hinteren Querträger 4 verbunden ist. Die Zugbänder 10 leiten die über die Haken in die Gegenstücke eingeleiteten Kräfte weiter in den hinteren Querträger 4. Dadurch entsteht ein Formschluss zwischen der Türverstärkung 7 und dem hinteren Querträger 4 in Fahrzeuglängsrichtung.

Der vordere und hintere Querträger 6 und 4 bilden zusammen mit den beiden Türverstärkungen 7 einen geschlossenen Ringverbund. Bei einem Seitenaufprall nun werden die in eine der Seitentüren 2 eingeleiteten Lasten optimal in die restliche Fahrzeugkarosserie 1 eingeleitet. Die Türverstärkungen 7 dienen dabei als Zugverband, der durch den Formschluss mit dem vorderen und hinteren Querträger 6 und 4 gehalten wird. Die Gefahr einer starken Intrusion der Seitentür 2 in den Fahrgastinnenraum ist so gering. Maßgeblich für diese Wirkung ist es, dass die Türverstärkungen 7 direkt an die Querträger 4 und 6 anschließen, und nicht die Enden der Türverstärkungen 7 und die Enden der Querträger 4 und 6 an unterschiedlichen Stellen positioniert sind. Nicht das Vorhandensein der Türverstärkungen 7 und der Querträger 4 und 6 allein ist ausreichend, sondern erst durch die Anordnung zueinander entsteht die volle Wirkung.

## Patentansprüche

1. Fahrzeugkarosserie mit einer linken und einer rechten Seitentüre und mit einem hinteren Querträger, der zwischen den an die Seitentüren hinten angrenzenden Abschnitten der Fahrzeugkarosserie im Bereich der hinteren Sitzbank verläuft, wobei in den Seitentüren (2) über deren gesamte Längserstreckung jeweils zumindest eine Türverstärkung (7) verläuft, **dadurch gekennzeichnet, dass** ein hinterer Endabschnitt der Türverstärkung eine Vorrichtung aufweist, die bei geschlossener Seitentür (2) in Fahrzeuglängsrichtung formschlüssig und / oder kraftschlüssig mit dem hinteren Querträger (4) verbunden ist.

2. Fahrzeugkarosserie nach Anspruch 1, **dadurch gekennzeichnet, dass** die Vorrichtung ein Haken oder ein Zapfen ist, der bei geschlossener Seitentür (2) in ein am hinteren Querträger (4) angebrachtes Gegenstück eingreift.

3. Fahrzeugkarosserie nach Anspruch 1 oder 2, **dadurch gekennzeichnet, dass** das Gegenstück über ein Zugband (10) am hinteren Querträger (4) angebracht ist.

4. Fahrzeugkarosserie nach einem der vorhergehenden Ansprüche, **dadurch gekennzeichnet, dass** ein vorderer Querträger (6) im Bereich zwischen den vorderen Enden der Türverstärkungen (7) verläuft.

5. Fahrzeugkarosserie nach Anspruch 4, **dadurch gekennzeichnet, dass** der vordere Querträger (6) ein Windlauf oder ein Tragrohr einer Instrumententafel ist.

6. Fahrzeugkarosserie nach Anspruch 4 oder 5, **dadurch gekennzeichnet, dass** am vorderen Endabschnitt der Türverstärkung (7) eine Vorrichtung (8) angebracht ist, die bei geschlossener Seitentür (2) in Fahrzeuglängsrichtung formschlüssig direkt oder indirekt mit dem vorderen Querträger (6) verbunden ist.

7. Fahrzeugkarosserie nach Anspruch 6, **dadurch gekennzeichnet, dass** die Vorrichtung (8) ein Haken oder ein Zapfen ist, der bei geschlossener Seitentür (2) in ein am vorderen Querträger (6) angebrachtes Gegenstück (9) eingreift.

## Claims

1. A vehicle body comprising a left and a right side door and a rear transverse member extending between the body portions adjoining the back of the side doors in the neighbourhood of the rear row of seats, wherein at least one door reinforcement (7) extends over the entire length of each side door (2), **characterised in that** a rear end portion of the door reinforcement comprises a device which, when the side door (2) is closed, is positively and/or non-positively connected to the rear transverse member (4) in the longitudinal direction of the vehicle.

2. A vehicle body according to claim 1, **characterised in that** the device is a hook or catch which engages a counterpart on the rear transverse member (4) when the side door (2) is closed.

3. A vehicle body according to claim 1 or 2, **characterised in that** the counterpart is attached to the rear transverse member (4) by a tension member (10).

4. A vehicle body according to any of the preceding claims, **characterised in that** a front transverse member (6) extends in the region between the front ends of the door reinforcement (7).

5. A vehicle body according to claim 4, **characterised in that** the front transverse member (6) is a scuttle-dash or a supporting tube of an instrument panel.

6. A vehicle body according to claim 4 or 5, **characterised in that** a device (8) on the front end portion of the door reinforcement (7) is positively connected directly or indirectly to the front transverse member (6) in the longitudinal direction of the vehicle when the side door (2) is closed.

7. A vehicle body according to claim 6, **characterised in that** the device (8) is a hook or catch which engages in a counterpart (9) on the front transverse member (6) when the side door (2) is closed.

## Revendications

1. Carrosserie de véhicule comprenant des portières gauche et droite ainsi qu'une traverse arrière qui s'étend entre les parties de la carrosserie de véhicule adjacentes à l'arrière aux portières dans la zone de la banquette arrière, et sur toute la longueur des portières (2) s'étend au moins un renforcement de portière (7),
**caractérisée en ce qu'**
une partie terminale arrière du renforcement de portière présente un dispositif relié à la traverse arrière (4) par complémentarité de formes et/ou de forces dans la direction longitudinale du véhicule lorsque la portière latérale (2) est fermée.

2. Carrosserie de véhicule selon la revendication 1,
**caractérisée en ce que**
le dispositif est un crochet ou un tenon qui s'engage dans une contre-pièce prévue sur la traverse arrière (4) lorsque la portière latérale (2) est fermée.

3. Carrosserie de véhicule selon la revendications 1 ou 2,
**caractérisée en ce que**
la contre-pièce est fixé à la traverse arrière (4) par une bande de traction (10).

4. Carrosserie de véhicule selon l'une des revendications précédentes,
**caractérisée en ce qu'**
une traverse avant (6) s'étend dans la zone entre les extrémités avant des renforcements de portière (7).

5. Carrosserie de véhicule selon la revendication 4,
**caractérisée en ce que**
la traverse avant (6) est un tablier ou un tube de support d'un tableau de bord.

6. Carrosserie de véhicule selon la revendication 4 ou 5,
**caractérisée en ce que**
sur le segment terminal avant du renforcement de portière (7) est logé un dispositif (8) relié par complémentarité de formes dans la direction longitudinale du véhicule directement ou indirectement à la traverse avant (6) lorsque la portière latérale (2) est fermée.

7. Carrosserie de véhicule selon la revendication 6,
**caractérisée en ce que**
le dispositif (8) est un crochet ou un tenon qui s'engage dans une contre-pièce (9) disposée sur la traverse avant (6) lorsque la portière latérale (2) est fermée.
